(19) Europäisches Patentamt / European Patent Office / Office européen des brevets

(11) **EP 2 930 396 A2**

(12) **EUROPÄISCHE PATENTANMELDUNG**

(43) Veröffentlichungstag:
14.10.2015  Patentblatt 2015/42

(51) Int Cl.:
*F16F 15/131* (2006.01)  *F16F 15/12* (2006.01)

(21) Anmeldenummer: **15154442.6**

(22) Anmeldetag: **10.02.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **19.02.2014   DE 102014203023**

(71) Anmelder: **Schaeffler Technologies AG & Co. KG 91074 Herzogenaurach (DE)**

(72) Erfinder:
• **Degler, Mario**
  **76534 Baden-Baden (DE)**
• **Maienschein, Stephan**
  **76534 Baden-Baden (DE)**

(54) **Drehmomentübertragungseinrichtung und Antriebssystem mit solch einer Drehmomentübertragungseinrichtung**

(57)     Die Erfindung betriff eine Drehmomentübertragungseinrichtung (15) und ein Antriebssystem mit solch einer Drehmomentübertragungseinrichtung, wobei die Drehmomentübertragungseinrichtung zur Drehmomentübertragung zwischen einer Eingangsseite (20) und einer Ausgangsseite (25) ausgebildet und drehbar um eine Drehachse (125) lagerbar ist, wobei eine mit der Eingangsseite koppelbare Momentenverzweigungseinrichtung (65), und eine mit der Ausgangsseite koppelbare Momentenkoppeleinrichtung (70) vorgesehen sind, wobei zwischen der Momentenverzweigungseinrichtung und der Momentenkoppeleinrichtung ein erster Drehmomentübertragungsweg (75) und parallel dazu ein zweiter Drehmomentübertragungsweg (80) vorgesehen sind, wobei im ersten Drehmomentübertragungsweg eine Phasenschieberanordnung (135) zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen, wobei die Momentenkoppeleinrichtung (70) ausgebildet ist, die über die Drehmomentübertragungswege geleiteten Drehmomente zu überlagern, wobei ein Federdämpfer (60) mit einer Dämpfereingangsseite vorgesehen ist, wobei die Dämpfereingangsseite (130) ausgangsseitig der Momentenkoppeleinrichtung mit der Momentenkoppeleinrichtung verbunden ist, wobei der Federdämpfer ein zwischen der Dämpfereingangsseite und der Ausgangsseite angeordnetes erstes Federanordnung (120.1) umfasst, wobei die Dämpfereingangsseite ausgebildet ist, das aus der Momentenkoppeleinrichtung kommende Drehmoment in die erste Federanordnung einzukoppeln, wobei der Federdämpfer ein erstes Schwingsystem mit der Dämpfereingangsseite und einer gegen die Wirkung der ersten Federanordnung bezüglich der Dämpfereingangsseite um die Drehachse drehbaren Ausgangsseite ausgebildet.

Fig. 1

**Beschreibung**

Die Erfindung betrifft eine Drehmomentübertragungseinrichtung gemäß Patentanspruch 1 und ein Antriebssystem gemäß Patentanspruch 12.

Aus der WO 2011/147 633 ist eine Drehmomentübertragungseinrichtung bekannt, die beispielsweise in einem Antriebsstrang eines Fahrzeugs eingesetzt werden kann, um Drehungleichförmigkeiten zu dämpfen bzw. so weit wie möglich zu eliminieren. Dabei weist die Drehmomentübertragungseinrichtung einen zur Drehung um eine Drehachse anzutreibenden Eingangsbereich und einen Ausgangsbereich auf, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen ist, wobei im ersten Drehmomentübertragungsweg eine ersten Phasenschieberanordnung zur Erzeugung einer Phasenverschiebung von über dem ersten Drehmomentübertragungsweg geleiteten Drehunförmigkeiten bezüglich über den zweiten Drehmomentübertragungsweg geleiteten Drehunförmigkeiten vorgesehen ist.

Es ist Aufgabe der Erfindung, eine verbesserte Drehmomentübertragungseinrichtung bereitzustellen.

Diese Aufgabe wird mittels einer Drehmomentübertragungseinrichtung gemäß Patentanspruch 1 gelöst. Vorteilhafte Ausführungsformen sind in den abhängigen Ansprüchen angegeben.

Erfindungsgemäß wurde erkannt, dass eine verbesserte Drehmomentübertragungseinrichtung dadurch bereitgestellt werden kann, dass die Drehmomentübertragungseinrichtung ausgebildet ist, ein Drehmoment zwischen einer Eingangsseite und einer Ausgangsseite zu übertragen und drehbar um eine Drehachse lagerbar ist. Ferner ist eine mit der Eingangsseite koppelbare Momentenverzweigungseinrichtung und eine mit der Ausgangsseite koppelbare Momentenkoppeleinrichtung vorgesehen. Zwischen der Momentenverzweigungseinrichtung und der Momentenkoppeleinrichtung ist ein erster Drehmomentübertragungsweg und ein parallel dazu angeordneter zweiter Drehmomentübertragungsweg vorgesehen. Im ersten Drehmomentübertragungsweg ist eine Phasenschieberanordnung zur Erzeugung einer Phasenverschiebung von über den ersten Drehmomentübertragungsweg geleiteten Drehunförmigkeiten über den zweiten Drehmomentübertragungsweg geleiteten Drehunförmigkeiten vorgesehen. Die Momentenkoppeleinrichtung ist ausgebildet, die über die Drehmomentübertragungswege geleiteten Drehmomente zu überlagern. Ferner ist ein Federdämpfer mit einer Dämpfereingangsseite vorgesehen, wobei die Dämpfereingangsseite ausgangsseitig der Momentenkoppeleinrichtung mit der Momentenkoppeleinrichtung verbunden ist. Wobei der Federdämpfer eine zwischen der Dämpfereingangsseite und der Ausgangsseite angeordnete erste Federanordnung umfasst. Die Dämpfereingangsseite ist ausgebildet, das aus der Momentenkoppeleinrichtung kommende Drehmoment in die erste Federanordnung einzukoppeln. Der Federdämpfer ist als erstes Schwingsystem mit der Dämpfereingangsseite und einer gegen die Wirkung der ersten Federanordnung bezüglich der Dämpfereingangsseite um die Drehachse drehbaren Ausgangsseite ausgebildet.

Dadurch kann eine verbesserte Dämpfung von Drehunförmigkeiten bzw. Drehschwingungen im zu übertragenden Drehmoment bereitgestellt werden.

In einer weiteren Ausführungsform bildet die Phasenschieberanordnung ein zweites Schwingsystem mit einer eingangsseitig der Phasenschieberanordnung angeordneten Rotationsmasse und einer gegen die Wirkung einer zweiten Federanordnung bezüglich der Rotationsmasse um die Drehachse drehbaren weiteren Rotationsmasse aus. Vorzugsweise ist die erste Federanordnung zumindest teilweise radial innen bezogen auf eine maximal radial außen verlaufende Außenkontur der zweiten Federanordnung angeordnet, vorzugsweise radial innen zu einer radial innen verlaufenden Innenkontur der zweiten Federanordnung angeordnet. Dadurch kann eine besonders kompakt ausgebildete Drehmomentübertragungseinrichtung bereitgestellt werden, die insbesondere in axialer Richtung besonders kompakt ist.

In einer weiteren Ausführungsform bildet die Phasenschieberanordnung ein zweites Schwingsystem mit einer eingangsseitig der Phasenschieberanordnung angeordneten Rotationsmasse und einer gegen die Wirkung einer zweiten Federanordnung bezüglich der Rotationsmasse um die Drehachse drehbaren weiteren Rotationsmasse aus, wobei eine Masse der ersten Federanordnung kleiner als eine Masse der zweiten Federanordnung ist. Dies hat ein besonders günstiges Dämpfungsverhalten für die Drehmomentübertragungseinrichtung zur Folge.

In einer weiteren Ausführungsform bildet die Phasenschieberanordnung ein zweites Schwingsystem mit einer eingangsseitig der Phasenschieberanordnung angeordneten Rotationsmasse und einer gegen die Wirkung einer zweiten Federanordnung bezüglich der Rotationsmasse um die Drehachse drehbaren weiteren Rotationsmasse aus. Der Federdämpfer weist eine erste Resonanzfrequenz und die Phasenschieberanordnung eine zweite Resonanzfrequenz auf. Dabei ist die zweite Resonanzfrequenz kleiner als die erste Resonanzfrequenz. Besonders vorteilhaft ist hierbei, wenn die zweite Resonanzfrequenz kleiner zwei Drittel, insbesondere kleiner der Hälfte, insbesondere kleiner einem Drittel der ersten Resonanzfrequenz ist. Dadurch kann eine besonders gute Dämpfung durch die Drehmomentübertragungseinrichtung von Drehunförmigkeiten bzw. Drehschwingungen erreicht werden.

In einer weiteren Ausführungsform weist die Momentenkoppeleinrichtung eine Übersetzung auf. Die Drehmomentübertragungseinrichtung ist derart ausgebildet, dass:

$$V = \frac{Cd}{Ct * \frac{1}{|1 - i|}}$$

mit einem Verhältnis V, einer Federrate Cd der ersten Federanordnung, einer Federrate Ct der zweiten Federanordnung und der Übersetzung i, wobei das Verhältnis kleiner 12, vorzugsweise kleiner 9, insbesondere kleiner 6 und/oder größer 0,1, insbesondere größer 0,5, insbesondere größer 1, besonders vorteilhafterweise größer 2 ist.

In einer weiteren Ausführungsform ist ein Turbinenrad eines hydrodynamischen Wandlers vorgesehen, wobei das Turbinenrad mit der Dämpfereingangsseite verbunden ist.

Ferner ist von Vorteil, wenn die erste Federanordnung eine Federrate mit einem Wert aufweist, der wenigstens in einem der folgenden Bereiche liegt: 10 Nm/° und 200 Nm/°, 15 Nm/° bis 80 Nm/°, 80 Nm/° bis 160 Nm/°, 110 Nm/° bis 160 Nm/°, 120 Nm/° bis 150 Nm/°.

In einer weiteren Ausführungsform umfasst die Momentenkoppeleinrichtung wenigstens eine Planetengetriebeanordnung. Die Planetengetriebeanordnung umfasst wenigstens einen Planetenträger, an dem wenigstens ein Planetenrad drehbar gelagert ist. Der Planetenträger ist mit der Eingangsseite gekoppelt. Das Planetenrad umfasst an einer äußeren Umfangsfläche einen ersten Abschnitt und einen zweiten Abschnitt. Vorzugsweise weist der erste Abschnitt einen größeren wirksamen Durchmesser als der zweite Abschnitt auf. Dadurch kann eine einfache Übersetzung innerhalb der Momentenkoppeleinrichtung bereitgestellt werden, die besonders kompakt ausgebildet ist. Ferner ist das Planetengetriebe dadurch besonders kostengünstig ausgebildet, da auf ein Hohlrad verzichtet werden kann.

In einer weiteren Ausführungsform umfasst die Momentenkoppeleinrichtung ein erstes Sonnenrad und ein zweites Sonnenrad. Das erste Sonnenrad ist mit dem ersten Übertragungsweg gekoppelt. Das zweite Sonnenrad ist mit der Dämpfereingangsseite verbunden. Der erste Abschnitt des Planetenrads steht mit dem ersten Sonnenrad in Kämmeingriff und stellt eine drehmomentschlüssige erste Verbindung bereit. Der zweite Abschnitt des Planetenrads steht mit dem zweiten Sonnenrad in Kämmeingriff und stellt eine zweite drehmomentschlüssige Verbindung bereit. Dadurch wird eine besonders gute und kompakte Drehmomentübertragungseinrichtung bereitgestellt.

Besonders vorteilhaft ist hierbei, wenn die Momentenkoppeleinrichtung eine Übersetzung mit einem Wert aus einem Bereich von 0,1 bis 0,4, vorzugsweise 1,5 bis 0,3, besonders vorteilhafterweise im Wesentlichen von 0,2 aufweist.

Ferner ist von Vorteil, wenn der Federdämpfer einen Retainer umfasst, der zumindest teilweise die erste Federanordnung in wenigstens eine Richtung fixiert, wobei eine Reibung zwischen der ersten Federanordnung und dem Retainer kleiner als 20 Nm, vorzugsweise kleiner als 10 Nm und/oder kleiner als 5 Prozent, vorzugsweise 2 Prozent eines maximal mit der Drehmomentübertragungseinrichtung zu übertragenden Drehmoments ist.

Die Aufgabe wird aber auch durch ein Antriebssystem gemäß Patentanspruch 12 gelöst. Vorteilhafte Ausführungsformen sind in den abhängigen Ansprüchen angegeben.

Erfindungsgemäß wurde erkannt, dass ein verbessertes Antriebssystem dadurch bereitgestellt werden kann, dass das Antriebssystem eine Drehmomentübertragungseinrichtung und eine Getriebeeingangswelle umfasst. Die Getriebeeingangswelle ist an einer Ausgangsseite der Drehmomentübertragungseinrichtung angekoppelt. Die Getriebeeingangswelle weist eine Steifigkeit von wenigstens 160 Nm/°, vorzugsweise größer 180 Nm/°, insbesondere größer 250 Nm/°, insbesondere größer 250 Nm/°, besonders vorteilhafterweise größer 400 Nm/° auf, wobei die Drehmomentübertragungseinrichtung wie oben beschrieben ausgebildet ist. Ferner ist eine Federrate der ersten Federanordnung kleiner der Steifigkeit der Getriebeeingangswelle. Dadurch kann eine besonders hohe Dämpfung von Drehunförmigkeiten bzw. Drehschwingungen in dem Antriebssystem bereitgestellt werden.

In einer weiteren Ausführungsform ist zumindest ein Getriebe vorgesehen, das vorzugsweise als halbautomatisch, vorzugsweise als ein vollautomatisch schaltendes Getriebes ausgebildet ist, wobei das Getriebe in die Getriebeeingangswelle mit der Drehmomentübertragungseinrichtung verbunden ist, wobei die Drehmomentübertragungseinrichtung eine erste Massenträgheit und das Getriebe eine zweite Massenträgheit aufweist, wobei die zweite Massenträgheit kleiner als die zweifache erste Massenträgheit ist. In dieser Ausgestaltung kann die Drehmomentübertragungseinrichtung besonders wirksam Drehschwingungen gegenüber dem Getriebe dämpfen und bildet zusammen mit dem Getriebe ein besonders vorteilhaftes und gut dämpfendes Antriebssystem aus.

Nachfolgend wird die Erfindung anhand von Figuren näher erläutert. Dabei zeigen:

Figur 1　eine schematische Darstellung eines Antriebssystems mit einer Drehmomentübertragungseinrichtung; und

Figur 2　einen Halblängsschnitt durch eine konstruktive Ausgestaltung der in Figur 1 gezeigten Drehmomentübertragungseinrichtung.

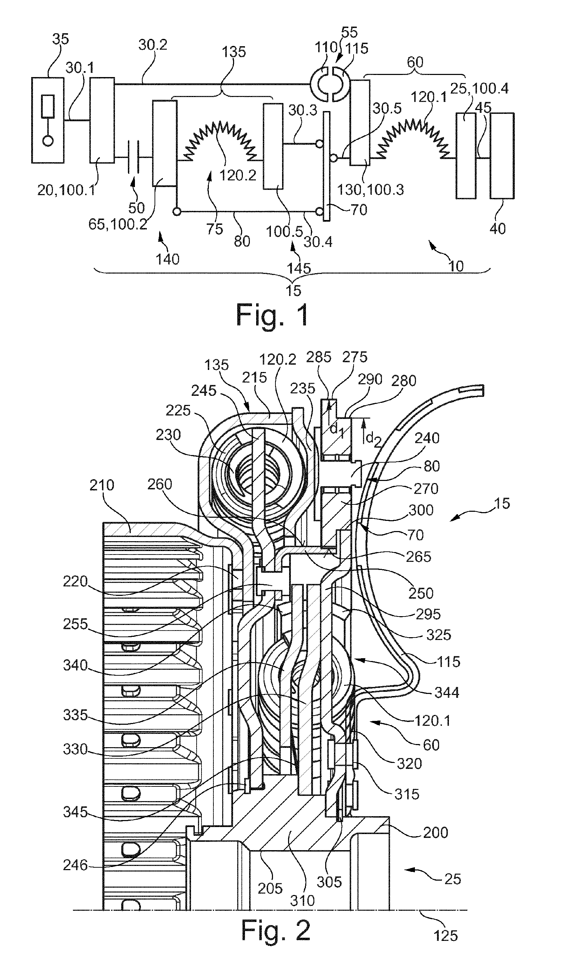

Figur 1 zeigt eine schematische Darstellung eines Antriebssystems 10 mit einer Drehmomentübertragungseinrichtung 15. In Figur 1 sind Rotationsmassen 100 mit rechteckförmigen Kasten symbolisiert. Dabei ist die Rotationsmasse 100 größer je größer der Kasten ist. Ferner werden in Figur 1 Rotationsmassen 100, beispielsweise eine Nabe, ein Flansch, ein Trägerblech oder ein Gussteil mit kastenförmigen Elementen symbolisiert. Eine besonders voluminöse Rotationsmasse 100, beispielsweise ein Turbinengehäuse oder eine besonders massereiche Rotationsmasse 100, kann durch einen verhältnismäßig großen Kasten dargestellt werden. Eine groß dargestellte Rotationsmasse 100 kann jedoch auch aus zeichnerischen Gründen dargestellt sein, beispielsweise um mehrere an der Rotationsmasse 100 eingreifende Kraftschlüsse bzw. Drehmomente übersichtlich darzustellen. Eine strichförmige Verbindungslinie stellt eine Drehmomentübertragung 30 dar.

Die Drehmomentübertragungseinrichtung 15 weist eine Eingangsseite 20 und eine Ausgangsseite 25 auf. Die Eingangsseite 20 ist über eine erste Drehmomentübertragung 30.1 eingangsseitig mit einem Hubkolbenmotor 35 verbunden.

Das Antriebssystem 10 umfasst neben dem Hubkolbenmotor 35 ferner ein Getriebe 40, das vorzugsweise als Halbautomatik, insbesondere als vollautomatisch schaltendes Getriebe ausgebildet ist. Das Getriebe 40 weist eine Getriebeeingangswelle 45 auf. Die Ausgangsseite 25 ist über die Getriebeeingangswelle 45 mit dem Getriebe 40 verbunden.

Die Drehmomentübertragungseinrichtung 15 umfasst eine Kupplungseinrichtung 50, einen hydrodynamischen Wandler 55, einen Federdämpfer 60, eine Momentenverzweigungseinrichtung 65 und eine Momentenkoppeleinrichtung 70. Zwischen der Momentenverzweigungseinrichtung 65 und der Momentenkoppeleinrichtung 70 ist ein erster Drehmomentübertragungsweg 75 und ein zweiter Drehmomentübertragungsweg 80 vorgesehen. Der erste Drehmomentübertragungsweg 75 ist parallel zu dem zweiten Drehmomentübertragungsweg 80 angeordnet.

Die Momentenkoppeleinrichtung 70 ist als Summiergetriebe, insbesondere als Planetengetriebe ausgebildet. Selbstverständlich kann die Momentenkoppeleinrichtung 70 auch andersartig ausgebildet sein und beispielsweise eine Hydraulik und/oder einen Hebelmechanismus zur Kopplung der beiden Drehmomentübertragungswege 75, 80 mit der Dämpfereingangsseite 130 aufweisen.

Die Kupplungseinrichtung 50 ist eine Einrichtung zur Drehmomentübertragung, die steuerbar ist, um zwischen ihren entgegengesetzten Enden ein Drehmoment selektiv zu übertragen oder zu trennen. Die Kupplungseinrichtung 50 kann beispielsweise als Trockenkupplung, Mehrscheibenkupplung oder eine in einem Ölbad laufende Nasskupplung ausgebildet sein. Zur Betätigung der Kupplungseinrichtung 50 kann beispielsweise eine hydraulisch ausgebildete Ausrückeinheit vorgesehen sein. Selbstverständlich ist auch eine elektrische Betätigung oder eine mechanische Betätigung der Kupplungseinrichtung 50 denkbar.

Der Wandler 55 stellt eine Drehmomentübertragung dar, die im hydrostatischen Zusammenspiel zwischen einem Pumpenrad 110 und einem Turbinenrad 115 herstellbar ist. Ein von dem Wandler übertragenes Drehmoment ist dabei abhängig von einem Drehzahlunterschied zwischen dem Turbinenrad 115 und dem Pumpenrad 110. Dabei kann aufgrund hydrostatischer Effekte eine Drehmomentüberhöhung auftreten, sodass der Wandler 55 im Wesentlichen als Drehzahluntersetzer arbeitet. Bei einer Angleichung der Drehzahlen des Turbinenrads 115 zum Pumpenrad 110 sinkt das mittels des Wandlers 55 übertragbare Drehmoment.

Eine Federanordnung 120 kann beispielsweise als Bogenfeder oder als Druckfeder oder als Turbinenfeder ausgebildet sein. Dabei wird in Figur 1 kein Unterschied zwischen einer Bogenfeder oder einer Druckfeder gemacht. Die Federanordnung ist dabei ausgebildet, eine schwingungsdämpfende Übertragung von Drehmoment bereitzustellen.

Die Bogenfeder ist dabei ein elastisches Element zur Kraftübertragung, das tangential um eine Drehachse 125 verlaufend angeordnet ist. Die Druckfeder weist eine ähnliche Funktionsweise wie die Bogenfeder auf. Abweichend davon ist die Druckfeder üblicherweise schraubenförmig ausgebildet und erstreckt sich nicht gebogen, sondern gerade entlang einer Tangente an einem Umkreis eines Kreissegments um die Drehachse 125. Die Federanordnung 120 kann eine oder mehrere Anordnungen der Bogenfeder, der Druckfeder und/oder der Turbinenfeder aufweisen. Dabei können die Bogenfedern, die Druckfeder oder die Turbinenfeder parallel und/oder seriell miteinander verschaltet sein.

Aufgrund der konstruktiven Ausgestaltung bilden die Eingangsseite 20 eine erste Rotationsmasse 100.1, die Momentenverzweigungseinrichtung 65 eine zweite Rotationsmasse 100.2, die Dämpfereingangsseite 130 eine dritte Rotationsmasse 100.3, die Ausgangsseite 25 eine vierte Rotationsmasse 100.4 aus.

Die Eingangsseite 20 ist über eine zweite Drehmomentübertragung 30.2 mit dem Pumpenrad 110 des Wandlers 55 verbunden. Das Turbinenrad 115 ist rechtsseitig mit einer Dämpfereingangsseite 130 des Federdämpfers 60 verbunden. Der Federdämpfer 60 weist ferner die Ausgangsseite 25 auf, wobei zwischen der Ausgangsseite 25 und der Dämpfereingangsseite 130 eine erste Federanordnung 120.1 vorgesehen ist.

Die Eingangsseite 20 ist ferner mit der Kupplungseinrichtung 50 verbunden. Die Kupplungseinrichtung 50 ist ausgangsseitig mit der Momentenverzweigungseinrichtung 65 verbunden. Der erste Drehmomentübertragungsweg 75 weist eine zweite Federanordnung 120.2 auf. Ausgangsseitig der zweiten Federanordnung 120.2 ist eine fünfte Rotationsmasse 100.5 vorgesehen. Die fünfte Rotationsmasse 100.5 bildet zusammen mit der zweiten Federanordnung 120.2 und der Momentenverzweigungseinrichtung 65 einen Phasenschieber 135 aus. Der Phasenschieber 135 ist ausgangsseitig der fünften Rotationsmasse 100.5 über eine dritte Drehmomentübertragung 30.3 mit der Momentenkoppeleinrichtung 70 verbunden.

Der zweite Drehmomentübertragungsweg 80 weist eine vierte Drehmomentübertragung 30.4 auf, die starr ausgebildet ist. Die vierte Drehmomentübertragung 30.4 verbindet dabei die Momentenverzweigungseinrichtung 65 mit der Momentenkoppeleinrichtung 70. Selbstverständlich ist auch denkbar, dass der zweite Drehmomentübertragungsweg 80 einen weiteren Federdämpfer 60 aufweist, sodass der zweite Drehmomentübertragungsweg 80 elastischer als in Figur 1 gezeigt ist. In der Ausführungsform weist der zweite Drehmomentübertragungsweg 80 eine Steifigkeit von wenigstens 600 Nm/°, vorzugsweise von 800 Nm/°, insbesondere 1500 Nm/°, insbesondere 1800 Nm/° auf. Die Momentenkoppeleinrichtung 70 ist ausgangsseitig über eine fünfte Drehmomentübertragung 30.5 mit der Dämpfereingangsseite 130 verbunden.

Der Federdämpfer 60 bildet ein erstes Schwingsystem aus. Dabei ist die Dämpfereingangsseite 130 gegen die Wirkung der ersten Federanordnung 120.1 bezüglich der Dämpfereingangsseite 130 um die Drehachse 125 drehbaren Ausgangsseite 25 ausgebildet. Das erste Schwingsystem weist dabei eine erste Resonanzfrequenz auf. Die erste Resonanzfrequenz liegt dabei in einem Bereich von etwa 800 bis 1200 Hz, vorzugsweise in einem Bereich von 800 bis 1000 Hz, insbesondere bei etwa 900 Hz. Dabei wird darauf hingewiesen, dass unter der Resonanzfrequenz diejenige Resonanzfrequenz verstanden wird, die die geringste Frequenz aufweist.

Der Hubkolbenmotor 35 stellt ein Drehmoment bereit. Aufgrund der Ausgestaltung des Hubkolbenmotors 35 erzeugt der Hubkolbenmotor 35 neben einem konstanten Drehmoment eine Drehunförmigkeit, mit der das Drehmoment überlagert ist. Das Drehmoment mit der Drehunförmigkeit wird über die erste Drehmomentübertragung 30.1 in die Eingangsseite 20 der Drehmomentübertragungseinrichtung 15 eingeleitet. Ist die Kupplung 50 geschlossen, wird die Drehunförmigkeit zusammen mit dem Drehmoment in zu der Momentenverzweigungseinrichtung 65 übertragen. Die Momentenverzweigungseinrichtung 65 verteilt das Drehmoment, aber auch die Drehunförmigkeit sowohl auf dem ersten als auch auf dem zweiten Drehmomentübertragungsweg 75, 80.

Die Phasenschieberanordnung 135 weist eine zweite Resonanzfrequenz auf. Die zweite Resonanzfrequenz ist dabei kleiner als die erste Resonanzfrequenz des Federdämpfers 60, wobei vorzugsweise die zweite Resonanzfrequenz kleiner als Zweidrittel, insbesondere kleiner als die Hälfte, insbesondere kleiner als ein Drittel der ersten Resonanzfrequenz ist. In der Ausführungsform liegt die zweite Resonanzfrequenz beispielhaft in einem Bereich von 400 bis 700 Hz, vorzugsweise zwischen 500 und 600 Hz. Dabei wird darauf hingewiesen, dass unter der Resonanzfrequenz diejenige Resonanzfrequenz verstanden wird, die die geringste Frequenz aufweist.

Die Phasenschieberanordnung 135 bildet ein zweites Schwingsystem aus. Bei dem zweiten Schwingsystem können zwei Rotationsmassen 100.1, 100.2, 100.5 gegen die Wirkung der zweiten Federanordnung 120.2 bezüglich einander schwingen. Die zweite Federanordnung 120.2 weist eine vorbestimmte Steifigkeit bzw. Federrate auf. Die beiden gegeneinander schwingenden Rotationsmassen 100.1, 100.2, 100.5 sind im Wesentlichen eingangsseitig der Phasenschieberanordnung 135 durch die Momentenverzweigungseinrichtung 65, die Kupplung, die Eingangsseite 20 und das Pumpenrad 110 bestimmt. Ausgangsseitig der Phasenschieberanordnung 135 wird die andere Masse durch die fünfte Rotationsmasse 100.5 bestimmt. Die fünfte Rotationsmasse 100.5 ist dabei deutlich kleiner als die Eingangsseitenmasse. Bestimmt durch die Federrate und die beiden Rotationsmassen 100.1, 100.2, 100.5 bzw. deren Massenträgheiten ergibt sich für das Schwingsystem im ersten Drehmomentübertragungsweg 75 die zweite Resonanzfrequenz. Bei Schwingungsanregung mit einer unter der zweiten Resonanzfrequenz liegenden Frequenz durch den Hubkolbenmotor 35 arbeitet Phasenschieberanordnung 135 unterkritisch, was bedeutet, dass Anregung und Reaktion im Wesentlichen gleichzeitig, also ohne gegenseitige Phasenverschiebung, auftreten. Mit Überschreiten der zweiten Resonanzfrequenz geht die Phasenschieberanordnung 135 in einen überkritischen Zustand über, in welchem Anregung und Reaktion zueinander verschoben laufen, was im Wesentlichen einen Phasensprung von 180° von Anregung und Reaktion bedeutet. Dies bedeutet, dass Schwingungsanteile, welche in dem über den ersten Drehmomentübertragungsweg 75 zu übertragenden Drehmomentanteil enthalten sind, dann, wenn die Anregungsfrequenz der Drehschwingung über der zweiten Resonanzfrequenz der Phasenschieberanordnung 135 liegt, um maximal 180° phasenverschoben in Richtung zur Momentenkoppeleinrichtung 70 weitergeleitet werden.

Es wird darauf hingewiesen, dass die Güte des Phasensprungs, also die Größe der erzeugten Phasenverschiebung von verschiedenen Bedingungen, insbesondere auch den im Bereich der Phasenschieberanordnung 135 auftretenden Reibeffekten abhängen wird, während die Lage des Übergangs durch die Resonanzfrequenz der Phasenschieberanordnung 135 definiert ist.

Selbstverständlich ist auch denkbar, dass, um ein Dämpfungsverhalten in der Drehmomentübertragung 30 über den ersten Drehmomentübertragungsweg 75 weiter zu beeinflussen, in dem ersten Drehmomentübertragungsweg 75 nicht dargestellte Reibungselemente vorgesehen sind.

Die vierte Drehmomentübertragung 30.4 weist zwar auch eine Resonanzfrequenz auf, diese ist jedoch so hoch, dass die vierte Drehmomentübertragung 30.4 durch die Drehschwingungen des Hubkolbenmotors 35 betrieben wird. Dies hat zur Folge, dass die über den zweiten Drehmomentübertragungsweg 80 zu übertragenden Drehmomentanteile der Drehschwingung bzw. des Drehmoments im Wesentlichen keinen Phasenversatz aufweisen.

Die Momentenkoppeleinrichtung 70 ist ausgebildet, die durch den ersten Drehmomentübertragungsweg 75 und den zweiten Drehmomentübertragungsweg 80 übertragenen Drehmomente zu überlagern. Dabei weist die Momentenkoppeleinrichtung 70 eine Übersetzung i auf. Je nach Wahl der Übersetzung i werden die Drehmomentübertragungswege 75, 80 hin zur fünften Drehmomentübertragung 30.5 über- oder untersetzt oder erhalten. Durch die Überlagerung werden die phasenversetzten Drehschwingungen durch Übertragen über den ersten Drehmomentübertragungsweg 75 und die nicht phasenversetzten Drehschwingungen, übertragen über den zweiten Drehmomentübertragungsweg 80, überlagert. Idealerweise weisen die Drehschwingungen, die über den ersten Drehmomentübertragungsweg 75 übertragen werden, wie oben beschrieben einen Phasenversatz von idealerweise 180° auf, um so die Drehschwingungen, die über den zweiten Drehmomentübertragungsweg 80 übertragen werden, in der Momentenkoppeleinrichtung 70 durch eine Aufsummierung auszulöschen, sodass ausgangsseitig der Momentenkoppeleinrichtung 70 ein im Wesentlichen konstantes Drehmoment der Dämpfereingangsseite 130 bereitgestellt wird.

Da der Idealzustand eines Phasenversatzes von 180° nur selten auftritt, sondern üblicherweise kleiner ist als 180°, löschen sich die über die beiden Drehmomentübertragungswege 75, 80 übertragenen Drehschwingungen nur teilweise auf, sodass das ausgangsseitig der Momentenkoppeleinrichtung 70 bereitgestellte Drehmoment nicht vollständig drehschwingungsfrei ist.

Um die verbleibenden Drehschwingungen zu tilgen, bildet die Dämpfereingangsseite 130 und die gegen die Wirkung der ersten Federanordnung 120.1 bezüglich der Dämpfereingangsseite 130 um die Drehachse 125 drehbaren Ausgangsseite das erste Schwingsystem aus. Der Federdämpfer 60 wird in der Ausführungsform sowohl unter- als auch überkritisch betrieben, um so eine besonders gute Auslöschung der durch die fünfte Drehmomentübertragung 30.5 bereitgestellte Drehschwingungen auszulöschen. Besonders vorteilhaft ist hierbei, wenn die Drehmomentübertragungseinrichtung 15 eine erste Massenträgheit und das Getriebe 45 eine zweite Massenträgheit aufweist, wobei die zweite Massenträgheit nicht größer als die <u>zweifache</u> erste Massenträgheit ist.

Figur 2 zeigt einen Halblängsschnitt durch eine konstruktive Ausgestaltung der in Figur 1 gezeigten Drehmomentübertragungseinrichtung 15. Figur 2 stellt zum erleichterten Verständnis einen Teil der bereits in Figur 1 erläuterten Drehmomentübertragungseinrichtung 15 dar. Dabei sind folgende Komponenten dargestellt. Neben der Momentenverzweigungseinrichtung 65 sind die Phasenschieberanordnung 135, die dritte Drehmomentübertragung 30.3, die Momentenkoppeleinrichtung 70, der Federdämpfer 60 sowie der zweite Drehmomentübertragungsweg 80 dargestellt. Im Folgenden wird auf den einzelnen konstruktiven Aufbau der verschiedenen Komponenten eingegangen.

Die Drehmomentübertragungseinrichtung 15 ist dabei drehbar um die Drehachse 125 gelagert. Die Drehmomentübertragungseinrichtung 15 weist eine Nabe 200 auf, die im Wesentlichen als Hohlnabe ausgebildet ist. Linksseitig der Nabe 200 ist die Eingangsseite 20 vorgesehen. Die Ausgangsseite 25 ist radial innenseitig in der Nabe 200 durch eine Welle-Nabe-Verbindung 205 ausgeführt. Selbstverständlich ist auch denkbar, dass die Ausgangsseite 25 andersartig ausgebildet ist. Die Welle-Nabe-Verbindung 205 stellt eine drehmomentschlüssige Verbindung zu der Getriebeeingangswelle 45 des Getriebes 40 bereit.

Die Momentenverzweigungseinrichtung 65 weist eine erste Seitenscheibe 215 auf, die sich radial von innen nach außen erstreckt und einen radial außenseitig etwa parallel zur Drehachse 125 verlaufenden Abschnitt aufweist. Ferner weist die Momentenverzweigungseinrichtung 65 eine erste Zwischenscheibe 235 auf, die radial außenseitig mit dem parallel zur Drehachse 125 verlaufenden Abschnitt drehmomentschlüssig verbunden ist. Die erste Zwischenscheibe 235 ist dabei drehbar radial außenseitig auf der Nabe 200 gelagert. An der ersten Zwischenscheibe 235 sind stirnseitig Bolzen 240 vorgesehen, die im Wesentlichen parallel zur Drehachse 125 verlaufend ausgerichtet sind. Dabei bilden die erste Zwischenscheibe 235 und der Bolzen 240 im Wesentlichen den zweiten Drehmomentübertragungsweg 80 aus. Radial innenseitig zu dem Abschnitt der ersten Seitenscheibe 215 ist axial zwischen der ersten Zwischenscheibe 235 und der ersten Seitenscheibe 215 die zweite Federanordnung 120.2 der Phasenschieberanordnung 135 angeordnet. Die zweite Federanordnung 120.2 ist zweistufig ausgebildet und weist ein radial außenseitig angeordnetes erstes Federelement 225 und ein radial innenseitig im ersten Federelement 225 angeordnetes zweites Federelement 230 auf. Die Federelemente 225, 230 sind in der Ausführungsform als Druckfeder ausgebildet. Selbstverständlich ist auch denkbar, dass die Federelemente 225, 230 auch als Schraubenfedern oder Bogenfedern ausgebildet sein können.

Die Phasenschieberanordnung 135 weist eine nicht dargestellte Anlagefläche auf, in der ebenso die Drehachse 125 angeordnet ist. Die Anlagefläche dient dazu, an einer ersten Stirnseite der Federanordnung 120.2 anzuliegen, um ein Drehmoment aus der ersten Seitenscheibe 215 in die zweite Federanordnung 120.2 einzukoppeln.

Die fünfte Rotationsmasse 100.5 wird in der Ausführungsform durch eine erste Mitnehmerscheibe 245 ausgebildet. Die erste Mitnehmerscheibe 245 erstreckt sich im Wesentlichen axial zwischen der ersten Seitenscheibe 215 und der ersten Zwischenscheibe 235 radial von innen nach außen. Die erste Mitnehmerscheibe 245 ist mittels eines ersten Sicherungsmittels 246 axial auf der Nabe 200 gesichert.

Radial innenseitig zur zweiten Federanordnung 120.2 ist ein erstes Sonnenrad 250 einer Planetengetriebeanordung der Momentenkoppeleinrichtung 70 vorgesehen. Das erste Sonnenrad 250 ist dabei aus einem topfartig ausgestalteten Blechstück gefertigt und mittels einer zweiten Nietverbindung 255 mit der ersten Mitnehmerscheibe 245 drehmomentschlüssig verbunden. Das erste Sonnenrad 250 weist an einer äußeren Umfangsfläche 260 eine erste Verzahnung 265 auf. Das erste Sonnenrad 250 zählt dabei mit seiner Massenträgheit zu der ersten Mitnehmerscheibe 245, wobei diese zusammen die fünfte Rotationsmasse 100.5 ausbilden. Das Sonnenrad 250 kann auch andersartig angeordnet und/oder ausgebildet sein.

Die Momentenkoppeleinrichtung 70 weist wenigstens ein Planetenrad 270 auf. Das Planetenrad 270 ist dabei auf dem Bolzen 240 drehbar gelagert. Der Bolzen 240 dient in Verbindung mit der ersten Zwischenscheibe 235 als Planetenträger. Das Planetenrad 270 weist in der Ausführungsform einen ersten Abschnitt 275 und einen zweiten Abschnitt 280 auf, wobei ein Durchmesser $d_1$ des Planetenrads 270 im ersten Abschnitt 275 größer ist als ein Durchmesser $d_2$ im zweiten Abschnitt 280. Die beiden Abschnitte 275, 280 sind axial angrenzend aneinander an einer äußeren Umfangsfläche des Planetenrads 270 angeordnet. Im ersten Abschnitt 275 ist eine zweite Verzahnung 285 und im zweiten Abschnitt 280 ist eine dritte Verzahnung 290 vorgesehen. Die zweite Verzahnung 285 greift dabei kämmend in die erste Verzahnung 265 ein, sodass das Planetenrad 270 auf einem wirksamen Durchmesser auf dem ersten Sonnenrad 250 abrollen kann und eine drehmomentschlüssige Verbindung bereitstellt.

Radial innenseitig zum ersten Sonnenrad 250 ist der Federdämpfer 60 vorgesehen. Der Federdämpfer 60 umfasst eine zweite Seitenscheibe 295, die auf einer axial gegenüberliegenden Seite zur ersten Seitenscheibe 215 angeordnet ist. Die zweite Seitenscheibe 295 erstreckt sich im Wesentlichen in radialer Richtung. Dabei weist die zweite Seitenscheibe 295 an einer äußeren Umfangsfläche eine vierte Verzahnung 300 auf, sodass die zweite Seitenscheibe 295 ein zweites Sonnenrad ausbildet. Die vierte Verzahnung 300 greift kämmend dabei in die dritte Verzahnung 290 des Planetenrads 270 ein und stellt dabei eine drehmomentschlüssige Verbindung zu dem Planetenrad 270 bereit. Dabei rollt das Planetenrad 270 auf einem zweiten wirksamen Durchmesser auf der zweiten Seitenscheibe 295 ab.

Die zweite Seitenscheibe 295 erstreckt sich radial von innen nach außen hin und ist radial innenseitig auf der Nabe 200 drehbar gelagert und mittels eines zweiten Sicherungsmittels 305 axial auf der Nabe 200 gegen einen Absatz 310 der Nabe 200 gesichert. Die zweite Seitenscheibe 295 ist mittels einer dritten Nietverbindung 315 mit einem Turbinenflansch 320 des Turbinenrads 115 drehmomentschlüssig verbunden.

Die zweite Seitenscheibe 295 weist dabei eine erste Lasche 325 auf, die sich in axialer Richtung in Richtung des Turbinenrads 115 erstreckt. Auf einer dem Turbinenrad 115 gegenüberliegenden Seite der zweiten Seitenscheibe 295 ist eine zweite Mitnehmerscheibe 330 vorgesehen, wobei die zweite Mitnehmerscheibe 330 radial innenseitig drehmomentschlüssig mit der Nabe 200 verbunden ist. Linksseitig der zweiten Mitnehmerscheibe 330 ist eine zweite Zwischenscheibe 335 vorgesehen, wobei radial außenseitig an der zweiten Zwischenscheibe 335 eine zweite Lasche 340 vorgesehen ist, die radial auf Höhe der ersten Lasche 325 angeordnet ist und sich axial in entgegengesetzter Richtung der zweiten Lasche 325 erstreckt. Die zweite Zwischenscheibe 335 ist dabei mittels weiterer nicht dargestellter Verbindungsmittel mit der zweiten Seitenscheibe 295 drehmomentschlüssig verbunden und drehbar auf der Nabe 200 angeordnet. Die erste Lasche und die zweite Lasche 325, 340 bilden einen Retainer 344 aus, in dem die erste Federanordnung 120.1 angeordnet ist. Ferner ist zwischen der zweiten Mitnehmerscheibe 330 und der zweiten Zwischenscheibe 335 eine Tellerfeder 340 vorgesehen. Die Tellerfeder 340 verspannt die zweite Zwischenscheibe 335 gegenüber der zweiten Mitnehmerscheibe 330.

Es sei im Folgenden zunächst angenommen, dass keine Drehschwingungsanteile im zu übertragenden Drehmoment vorhanden sind, also ein konstantes Drehmoment an dem Lamellenträger 210 anliegt, das über die Drehmomentübertragungseinrichtung 15 an die Ausgangsseite 25 zu übertragen ist. Dies bedeutet, dass die Komponenten der Drehmomentübertragungseinrichtung 15 mit identischer Drehzahl um die Drehachse 125 rotieren. Infolgedessen werden die Planetenräder 270 sich nicht um ihre eigenen Drehachsen bzw. um den Bolzen 240 drehen. Dies bedingt auch, dass die abtriebsseitige zweite Seitenscheibe 295 mit gleicher Drehzahl wie die Eingangsseite 20 dreht.

Tritt nun ein spontaner Drehmomentanstieg, resultierend aus beispielsweise einer Drehschwingung des Hubkolbenmotors 35 im Sinne einer Schwingungsanregung, auf, so wird die Schwingungsanregung über den Lamellenträger 210 und die erste Seitenscheibe 215 zusammen mit der ersten Zwischenscheibe 235 in dem Bolzen 240 eingeleitet. Der Bolzen 240 weist dabei eine höhere Drehgeschwindigkeit kurzfristig auf als das erste Sonnenrad 250, sodass das Planetenrad 270 in Umfangsrichtung gegenüber dem ersten Sonnenrad 250 verdreht wird. Dabei rollt das Planetenrad 270 mit der zweiten Verzahnung 285 entlang des ersten wirksamen Durchmessers auf dem ersten Sonnenrad 250 ab. Durch die Übersetzung i, die die Momentenkoppeleinrichtung 70 aufweist, wird gleichzeitig das zweite Sonnenrad bzw. die zweite Seitenscheibe 295 verdreht, sodass der Federdämpfer 60 bereits betätigt wird. Die Drehschwingung wird aber auch im überkritischen Betriebszustand über die zweite Federanordnung 120.2 und die erste Mitnehmerscheibe 245 in das erste Sonnenrad 250 eingeleitet. Im überkritischen Bereich eilt jedoch die Drehschwingung am ersten Sonnenrad 250 gegenüber der über den Bolzen 240 übertragenen Drehschwingung bzw. über dem zweiten Drehmomentübertragungsweg 80 übertragenen Drehschwingung nach. Am Planetenrad 270 wird die Drehschwingung des ersten Drehmomentübertragungswegs 75 mit der Drehschwingung kommend aus dem zweiten Drehmomentübertragungsweg 80 überlagert. Dabei wird die aus dem ersten Drehmomentübertragungsweg 75 kommende Drehschwingung untersetzt entsprechend der Übersetzung i der Momentenkoppeleinrichtung 70. Dies hat beispielsweise zur Folge, dass, wenn eine Drehschwingung 20 Nm aufweist, und die Momentenkoppeleinrichtung eine Übersetzung von 0,2 aufweist, die Drehschwingung zu 20 % über den zweiten Drehmomentübertragungsweg 80 und zu 80 % über den ersten Drehmomentübertragungsweg 75 übertragen wird, wobei dann die Drehschwankung, die über den ersten Drehmomentübertragungsweg 75 übertragen wird, durch die Übersetzung i untersetzt wird, sodass sich im Idealfall von einer Phasenverschiebung von 180° die über den ersten Drehmomentübertragungsweg 75 und über den zweiten Drehmomentübertragungsweg 80 übertragenen jeweiligen Anteile der Drehschwankung in der Momentenkoppeleinrichtung 70 auslöschen.

Besonders vorteilhaft ist hierbei, wenn die erste Federanordnung 120.1 radial innenseitig und axial überlappend zu einer Außenkontur der zweiten Federanordnung 120.2, besonders vorteilhafterweise zu einer radial innen verlaufenden Innenkontur der zweiten Federanordnung 120.2, angeordnet ist. Dadurch kann, wie in Figur 2 zu erkennen, eine besonders kompakte Drehmomentübertragungseinrichtung 15 bereitgestellt werden. Ferner ist hierbei von Vorteil, wenn eine Masse der ersten Federanordnung 120.1 kleiner als eine Masse der zweiten Federanordnung 120.2 ist.

Die Momentenkoppeleinrichtung 70 weist in der Ausführungsform die Übersetzung i = 0,2 auf. Selbstverständlich ist auch denkbar, dass die Momentenkoppeleinrichtung 70 eine andersartige Übersetzung aufweist. Dabei ist besonders von Vorteil, wenn die Momentenkoppeleinrichtung 70 eine Übersetzung aufweist, die einen Wert aufweist, der in einem Bereich von 0,1 bis 0,4, vorzugsweise 0,15 bis 0,3 liegt.

In der Ausführungsform weist die zweite Federanordnung 120.2 eine Federrate Ct auf. Die erste Federanordnung 120.1 weist eine Federrate mit einem Wert auf, der wenigstens in einem der folgenden Bereiche liegt: 10 Nm/° und 200 Nm/°, 15 Nm/° bis 80 Nm/°, 80 Nm/° bis 160 Nm/°, 110 Nm/° bis 160 Nm/°, 120 Nm/° bis 150 Nm/°.

Ferner hat sich als besonders vorteilhaft herausgestellt, wenn gilt, dass:

$$V = \frac{Cd}{Ct * \frac{1}{|1 - i|}}$$

mit einem Verhältnis V, der Federrate Cd der ersten Federanordnung 120.1, Ct der Federrate der zweiten Federanordnung 120.2 und der Übersetzung i, wobei das Verhältnis V vorzugsweise kleiner 12, besonders vorteilhafterweise kleiner 9, insbesondere kleiner 6, und/oder größer 0,1, insbesondere größer 0,5, insbesondere größer 1, besonders vorteilhafterweise größer 2 ist.

Die Drehmomentübertragungseinrichtung 15 ist dabei mit der Getriebeeingangswelle 45 verbunden, wobei die Getriebeeingangswelle 45 vorteilhafterweise eine Steifigkeit von wenigstens 160 Nm/°, besonders vorteilhafterweise größer 180 Nm/°, insbesondere größer 250 Nm/°, besonders vorteilhafterweise größer 400 Nm/° aufweist. Dabei ist von Vorteil, wenn die erste Federanordnung 120.1 des Federdämpfers 60 eine Steifigkeit aufweist, die kleiner ist als die Steifigkeit der Getriebeeingangswelle 45. Dadurch kann ein besonders gut abgestimmtes Antriebssystem 10 insbesondere eine besonders gute Abstimmung der ersten Federanordnung 120.1 auf die Getriebeeingangswelle 45 bereitgestellt werden. Dies wird ferner auch durch die Anordnung des Federdämpfers 60 momentenflussseitig eingangsseitig der Getriebeeingangswelle zwischen Momentenkoppeleinrichtung 70 und der Getriebeeingangswelle 45 verstärkt.

Ferner hat sich als besonders vorteilhaft erwiesen, wenn eine Gesamtmasse der zweiten Federanordnung 120.2 größer ist als eine Gesamtmasse der ersten Federanordnung 120.1.

Es wird darauf hingewiesen, dass die erste Federanordnung 120.1 in der Ausführungsform einstufig ausgebildet ist. Selbstverständlich ist auch denkbar, dass die erste Federanordnung 120.1 mehrstufig ausgebildet ist. Dabei wird unter einer Mehrstufigkeit verstanden, dass eine Federkennlinie der ersten Federanordnung wenigstens zwei Abschnitte unterschiedlicher Steigung aufweist. Die Mehrstufigkeit der ersten Federanordnung 120.1 kann beispielsweise durch zwei oder mehr Federelemente erreicht werden, wobei eines der beiden Federelemente erst ab einer vordefinierten Verformung des anderen Federelements betätigt wird.

Rotiert die Drehmomentübertragungseinrichtung 15 um die Drehachse 125, wird die erste Federanordnung 120.1 radial nach außen innenseitig an die Laschen 325, 340 des Retainers gedrückt. Wird die erste Federanordnung 120.1 betätigt, reibt die erste Federanordnung 120.1 radial außenseitig an den Laschen 325, 340. Dabei ist von Vorteil, wenn die Reibung zwischen der ersten Federanordnung 120.1 und dem Retainer 344 gering gehalten wird. Dabei ist von Vorteil, wenn die Reibung zwischen der ersten Federanordnung 120.1 und dem Retainer 344 kleiner als 20 Nm, vorzugsweise kleiner als 10 Nm ist. Ferner ist von Vorteil, wenn die Reibung zwischen der ersten Federanordnung 120.1 und dem Retainer 344 kleiner als 5 Prozent, vorzugsweise 2 Prozent eines maximal mit der Drehmomentübertragungseinrichtung 15 zu übertragenden Drehmoments ist.

Ferner wird darauf hingewiesen, dass die zweite Federanordnung 120.2 andersartig angeordnet beispielsweise zwischen der dritten Rotationsmasse 100.3 und der fünften Rotationsmasse 100.5 oder der zweiten Rotationsmasse 100.2 und der dritten Rotationsmasse 100.3 angeordnet ist.

**Bezugszeichenliste**

| | |
|---|---|
| 10 | Antriebssystem |
| 15 | Drehmomentübertragungseinrichtung |
| 20 | Eingangsseite |
| 25 | Ausgangsseite |
| 30 | Drehmomentübertragung |
| 35 | Hubkolbenmotor |
| 40 | Getriebe |
| 45 | Getriebeeingangswelle |
| 50 | Kupplungseinrichtung |
| 55 | Wandler |
| 60 | Federdämpfer |
| 65 | Momentenverzweigungseinrichtung |
| 70 | Momentenkoppeleinrichtung |
| 75 | erster Momentenübertragungsweg |
| 80 | zweiter Momentenübertragungsweg |
| | |
| 100 | Rotationsmasse |
| 110 | Pumpenrad |
| 115 | Turbinenrad |
| 120.1 | Erste Federanordnung |
| 120.2 | Zweite Federanordnung |
| 125 | Drehachse |
| 130 | Dämpfereingangsseite |
| 135 | Phasenschieberanordnung |
| | |
| 200 | Nabe |
| 205 | Welle-Nabe-Verbindung |
| 210 | Lamellenträger |
| 215 | erste Seitenscheibe |
| 220 | erste Verbindung |
| 225 | erstes Federelement |
| 230 | zweites Federelement |
| 235 | erste Zwischenscheibe |
| 240 | Bolzen |
| 245 | erste Mitnehmerscheibe |
| 246 | Erstes Sicherungsmittel |
| 250 | erstes Sonnenrad |
| 255 | zweite Verbindung |
| 260 | Äußere Umfangsfläche |
| 265 | erste Verzahnung |
| 270 | Planetenrad |
| 275 | erster Abschnitt |
| 280 | zweiter Abschnitt |
| 285 | zweite Verzahnung |
| 290 | dritte Verzahnung |
| 295 | zweite Seitenscheibe |
| 300 | vierte Verzahnung |
| 305 | zweites Sicherungsmittel |
| 310 | Absatz |
| 315 | dritte Verbindung |
| 320 | Turbinenflansch |
| 325 | erste Lasche |
| 330 | zweite Mitnehmerscheibe |
| 335 | zweite Zwischenscheibe |
| 340 | zweite Lasche |
| 344 | Retainer |
| 345 | Tellerfeder |

**Patentansprüche**

1. Drehmomentübertragungseinrichtung (15) zur Drehmomentübertragung zwischen einer Eingangsseite (20) und einer Ausgangsseite (25),

- wobei die Drehmomentübertragungseinrichtung (15) drehbar um eine Drehachse (125) lagerbar ist,
- wobei eine mit der Eingangsseite (20) koppelbare Momentenverzweigungseinrichtung (65), und eine mit der Ausgangsseite (25) koppelbare Momentenkoppeleinrichtung (70) vorgesehen sind,
- wobei zwischen der Momentenverzweigungs-einrichtung (65) und der Momentenkoppelein-richtung (70) ein erster Drehmomentübertra-gungsweg (75) und parallel dazu ein zweiter Drehmomentübertragungsweg (80) vorgesehen ist,
- wobei im ersten Drehmomentübertragungsweg (75) eine Phasenschieberanordnung (135) zur Erzeugung einer Phasenverschiebung von über den ersten Drehmomentübertragungsweg (75) geleiteten Drehungleichförmigkeiten be-züglich über den zweiten Drehmomentübertra-gungsweg (80) geleiteten Drehungleichförmig-keiten vorgesehen,
- wobei die Momentenkoppeleinrichtung (70) ausgebildet ist, die über die Drehmomentüber-tragungswege (75, 80) geleiteten Drehmomen-te zu überlagern,
- **dadurch gekennzeichnet, dass**
- ein Federdämpfer (60) mit einer Dämpfereingangsseite (130) vorgesehen ist,
- wobei die Dämpfereingangsseite (130) ausgangsseitig der Momentenkoppeleinrichtung (70) mit der Momentenkoppeleinrichtung (70) verbunden ist,
- wobei der Federdämpfer (60) ein zwischen der Dämpfereingangsseite (130) und der Aus-gangsseite (25) angeordnetes erstes Federan-ordnung (120.1) umfasst,
- wobei die Dämpfereingangsseite (130) ausgebildet ist, das aus der Momentenkoppeleinrichtung (70) kommende Drehmoment in die erste Federanordnung (120, 1) einzukoppeln,
- wobei der Federdämpfer (60) ein erstes Schwingsystem mit der Dämpfereingangsseite (130) und einer gegen die Wirkung der ersten Federanordnung (120.1) bezüglich der Dämpfereingangsseite (130) um die Drehachse (125) drehbaren Ausgangsseite (25) ausgebildet.

**2.** Drehmomentübertragungseinrichtung (15) nach Anspruch 1, **dadurch gekennzeichnet, dass**

- die Phasenschieberanordnung (135) ein zweites Schwingsystem mit einer eingangsseitig der Phasenschieberanordnung (135) angeordneten Rotationsmasse und einer gegen die Wirkung einer zweiten Federanordnung (120.2) bezüglich der Rotationsmasse (100.2) um die Drehachse (125) drehbaren weiteren Rotationsmasse (100.5) ausbildet,
- vorzugsweise die erste Federanordnung (120.1) zumindest teilweise radial innen bezogen auf eine maximal radial außen verlaufende Außenkontur der zweiten Federanordnung (120.2),
- vorzugsweise radial innen zu einer radial innen verlaufenden Innenkontur der zweiten Federanordnung (120.2), angeordnet ist.

**3.** Drehmomentübertragungseinrichtung (15) nach Anspruch 1 oder 2, **dadurch gekennzeichnet, dass**

- die Phasenschieberanordnung (135) ein zweites Schwingsystem mit einer eingangsseitig der Phasenschieberanordnung (135) angeordneten Rotationsmasse und einer gegen die Wirkung einer zweiten Federanordnung (120.2) bezüglich der Rotationsmasse (100.2) um die Drehachse (125) drehbaren weiteren Rotationsmasse (100.5) ausbildet,
- wobei eine Masse der ersten Federanordnung (120.1) kleiner als eine Masse der zweiten Federanordnung (120.2) ist.

**4.** Drehmomentübertragungseinrichtung (15) nach einem der Ansprüche 1 bis 3, **dadurch gekennzeichnet, dass**

- die Phasenschieberanordnung (135) ein zweites Schwingsystem mit einer eingangsseitig der Phasenschieberanordnung (135) angeordneten Rotationsmasse und einer gegen die Wirkung einer zweiten Federanordnung (120.2) bezüglich der Rotationsmasse (100.2) um die Drehachse (125) drehbaren weiteren Rotationsmasse (100.5) ausbildet,
- wobei der Federdämpfer (60) eine erste Resonanzfrequenz und die Phasenschieberanordnung (135) eine zweite Resonanzfrequenz aufweist,
- wobei die zweite Resonanzfrequenz kleiner als die erste Resonanzfrequenz,
- wobei vorzugsweise die zweite Resonanzfrequenz kleiner Zweidrittel, insbesondere kleiner der Hälfte, insbesondere kleiner einem Drittel der ersten Resonanzfrequenz.

**5.** Drehmomentübertragungseinrichtung (15) nach einem der Ansprüche 2 bis 4, **dadurch gekennzeichnet, dass**

- die Momentenkoppeleinrichtung (70) eine Übersetzung (i) aufweist,
- wobei die Drehmomentübertragungseinrichtung (15) derart ausgebildet ist, dass gilt:

$$V = \frac{Cd}{Ct * \frac{1}{|1 - i|}}$$

- mit einem Verhältnis V, einer Federrate Cd der ersten Federanordnung (120.1), einer Federrate Ct der zweiten Federanordnung (120.2) und der Übersetzung i,
- wobei das Verhältnis (V) kleiner 12, vorzugsweise kleiner 9, insbesondere keiner 6 und/oder größer 0,1, insbesondere größer 0,5, insbesondere größer 1, besonders vorteilhafterweise größer 2, ist.

**6.** Drehmomentübertragungseinrichtung (15) nach einem der Ansprüche 1 bis 5, **dadurch gekennzeichnet, dass** ein Turbinenrad (115) eines hydrodynamischen Wandlers (55) vorgesehen ist, wobei das Turbinenrad (115) mit der Dämpfereingangsseite (130) verbunden ist.

**7.** Drehmomentübertragungseinrichtung (15) nach einem der Ansprüche 1 bis 6, **dadurch gekennzeichnet, dass** die erste Federanordnung (120.1) eine Federrate (Cd) mit einem Wert aufweist, der wenigstens in einem der folgenden Bereichen liegt: 10 Nm/° und 200 Nm/°, 15 Nm/° bis 80 Nm/°, 80 Nm/° bis 160 Nm/°, 110 Nm/° bis 160 Nm/°, 120 Nm/° bis 150 Nm/°.

**8.** Drehmomentübertragungseinrichtung (15) nach einem der Ansprüche 1 bis 7, **dadurch gekennzeichnet, dass**

- die Momentenkoppeleinrichtung (70) wenigstens eine Planetengetriebeanordnung umfasst,
- wobei eine Planetengetriebeanordnung wenigstens einen Planetenträger (240, 235) umfasst, an dem wenigstens ein Planetenrad (280) drehbar gelagert ist,
- wobei der Planetenträger (235, 240) mit der Eingangsseite (20) gekoppelt ist,
- wobei das Planetenrad (280) an einer äußeren Umfangsseite einem ersten Abschnitt (275) und einen zweiten Abschnitt (280) umfasst,
- wobei vorzugsweise der erste Abschnitt (275) einen größeren wirksamen Durchmesser als der zweite Abschnitt (280) aufweist.

9. Drehmomentübertragungseinrichtung (15) nach Anspruch 8, **dadurch gekennzeichnet, dass**

- die Momentenkoppeleinrichtung (70) ein erstes Sonnenrad (250) und ein zweites Sonnenrad (295) umfasst,
- wobei das erste Sonnenrad (250) mit dem ersten Drehmomentübertragungsweg (75) gekoppelt,
- wobei das zweite Sonnenrad (295) mit der Dämpfereingangsseite (130) verbunden ist,
- wobei der erste Abschnitt (275) des Planetenrads (280) mit dem erste Sonnenrad (250) in Kämmeingriff steht und eine erste drehmomentschlüssige Verbindung und der zweite Abschnitt des Planetenrads (280) mit dem zweiten Sonnenrad (295) in Kämmeingriff steht und eine zweite drehmomentschlüssige Verbindung bereitstellt.

10. Drehmomentübertragungseinrichtung (15) nach einem der Ansprüche 1 bis 9, **dadurch gekennzeichnet, dass** die Momentenkoppeleinrichtung (70) eine Übersetzung mit einem Wert aus einem Bereich von 0,1 bis 0, 4, vorzugsweise 0, 15 bis 0,3, besonders vorteilhafterweise von im Wesentlichen 0,2 aufweist.

11. Drehmomentübertragungseinrichtung (15) nach einem der Ansprüche 1 bis 10, **dadurch gekennzeichnet, dass** der Federdämpfer (60) einen Retainer (344) umfasst, der zumindest teilweise die erste Federanordnung (120.1) in wenigstens eine Richtung fixiert, wobei eine Reibung zwischen der ersten Federanordnung (120.1) und dem Retainer (344) kleiner als 20 Nm, vorzugsweise kleiner als 10 Nm und/oder kleiner als 5 Prozent, vorzugsweise 2 Prozent eines maximal mit der Drehmomentübertragungseinrichtung (15) zu übertragenden Drehmoments ist.

12. Antriebssystem (10) mit einer Drehmomentübertragungseinrichtung (15) und einer Getriebeeingangswelle (45),

- wobei die Getriebeeingangsseite (45) an der Ausgangsseite (25) der Drehmomentübertragungseinrichtung (15) angekoppelt ist,
- wobei die Getriebeeingangswelle (45) eine Steifigkeit von wenigstens 160 Nm/°, vorzugsweise größer 180 Nm/°, insbesondere größer 250 Nm/°, besonders vorteilhafterweise größer 400 Nm/° aufweist,
**dadurch gekennzeichnet, dass**
- die Drehmomentübertragungseinrichtung (15) nach einem der Ansprüche 1 bis 11 ausgebildet ist,

- wobei eine Federrate der ersten Federanordnung (120.1) kleiner der Steifigkeit der Getriebeeingangswelle (45) ist.

13. Antriebssystem (10) nach Anspruch 12, **dadurch gekennzeichnet, dass**

- eine zumindest ein Getriebe (40) vorgesehen ist, das vorzugsweise als halbautomatisches, vorzugsweise als ein vollautomatisches schaltendes Getriebe (40) ausgebildet ist,
- wobei das Getriebe (40) über die Getriebeeingangswelle (45) mit der Drehmomentübertragungseinrichtung (15) verbunden ist,
- wobei die Drehmomentübertragungseinrichtung (15) eine erste Massenträgheit und das Getriebe (45) eine zweite Massenträgheit aufweist,
- wobei die zweite Massenträgheit kleiner als die zweifache erste Massenträgheit ist.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011147633 A